# FASCICULE DE BREVET EUROPEEN

(11) **EP 1 371 785 B1**
(45) Date de publication et mention de la délivrance du brevet: **26.01.2005**
(21) Numéro de dépôt: 02356167.3
(22) Date de dépôt: 29.08.2002
(51) Int. Cl.: E02D 29/12, B65D 90/10

(54) **Elément préfabriqué pour un trou d'homme et trou d'homme**
Vorgefertigtes Element für ein Mannloch und Mannloch
Prefabricated element for manhole and manhole

(30) Priorité: 13.06.2002 FR 0207307
(43) Date de publication de la demande: 17.12.2003
(73) Titulaire: Legrand, Alain, 69270 Couzon au Mont D'or (FR); Legrand, Michèle, 69270 Couzon au Mont D'or (FR)
(72) Inventeur: Legrand, Alain, 69270 Couzon au Mont D'or (FR); Legrand, Michèle, 69270 Couzon au Mont D'or (FR)
(74) Mandataire: Myon, Gérard

(56) Documents cités:
- FR-A- 2 715 676
- FR-A- 2 771 116
- GB-A- 2 270 709

## Description

L'invention a trait à un élément préfabriqué pour chambre de tirage et à une chambre de tirage pour câbles et/ou conduits qui est formée à partir de tels éléments.

Une chambre de tirage est un ouvrage, généralement enterré à fleur de sol, destiné à recevoir les câbles et/ou canalisations d'énergie, de télécommunication, de signalisation et/ou de fluide, notamment dans le domaine des installations fixes ferroviaires. Cette chambre, de section généralement carrée ou rectangulaire, est recouverte d'un dispositif de fermeture amovible et a des dimensions suffisantes pour permettre à un homme d'y pénétrer et d'exécuter les travaux nécessaires.

Il est connu des chambres de tirage constituées d'éléments préfabriqués en béton armé, tels que décrits dans le brevet français 2 584 876, ainsi que dans la norme française NF F55-071 de 1990. Dans ce cas, la chambre de tirage comprend des parois d'épaisseur donnée, couramment dénommées « piédroits », obtenues par l'empilage d'éléments préfabriqués identiques en béton armé, permutables et interchangeables. Ces éléments ont une section globalement rectangulaire et comprennent à leurs deux extrémités un tenon de forme parallélépipédique rectangle qui prolonge l'élément dans une de ses demi-sections sur une longueur sensiblement égale à l'épaisseur de l'élément.

Préférentiellement, ces tenons sont disposés de manière à prolonger l'élément dans une demi-section supérieure à une extrémité de l'élément et dans une demi-section inférieure à l'autre extrémité. Chaque extrémité des éléments comporte ainsi sur une demi-section, un tenon et sur l'autre demi-section, un évidement formant mortaise. On assemble les éléments entre eux en positionnant le tenon d'un élément dans la demi-section vide formant mortaise d'un autre élément adjacent de manière à ce que ces éléments forment un angle droit entre eux. Quatre éléments ainsi associés forment une figure parallélépipédique rectangle ou carrée couramment dénommée « couronne ». L'empilement des couronnes compose une chambre de tirage. L'assemblage des éléments entre eux et des couronnes entre elles est fait, sans aucun scellement, par simple contact.

Certains éléments présentent un évidement permettant le passage des câbles et/ou conduits entre l'extérieur et l'intérieur de la chambre de tirage.

Il est également connu des chambres de tirage composées obtenues par l'assemblage, pour chacun des grands côtés d'une telle chambre, d'au moins deux éléments mis bout à bout non plus à angle droit mais à 180°. Il est nécessaire de rigidifier un tel assemblage, comme décrit dans la norme NF-F55-071, en positionnant une entretoise transversale au niveau de la jonction des éléments préfabriqués.

Il est connu que l'absence de scellement induit un jeu entre les éléments assemblés, d'où une difficulté à obtenir des angles de couronnes parfaitement droits.

Par ailleurs, l'ensemble de la chambre de tirage n'est pas rigidifié et est donc susceptible de se déformer lors de mouvements du sol.

Il est également connu que les chambres de tirage constituées à partir d'éléments en béton armé nécessitent, lors du montage, une manipulation par deux ou trois personnes, chaque élément étant d'un poids compris entre 30 et 57 kilogrammes suivant les dimensions couramment utilisées. Ce poids important limite également le nombre d'éléments transportables par un même véhicule.

Les évidements pour le passage des câbles et/ou des conduits étant eux aussi pré-existants dans les éléments, il s'avère délicat de positionner exactement ces évidements en face des arrivées de câbles ou de conduits lors de l'installation de la chambre de tirage.

C'est à ces inconvénients qu'entend plus particulièrement remédier l'invention en proposant des éléments préfabriqués aisés à manipuler et d'assemblage stable.

A cet effet, l'invention a pour objet un élément destiné à former une partie d'un piédroit d'une chambre de tirage, cet élément comprenant, à chaque extrémité, un tenon de forme parallélépipédique rectangle prolongeant l'élément dans l'une de ses demi-sections d'une longueur sensiblement égale à l'épaisseur de l'élément, caractérisé en ce que chaque tenon comprend, sur sa section verticale, une pièce creuse traversant le tenon, située entre deux faces parallèles opposées du tenon destinées à coopérer avec un autre tenon, qui a une extrémité en affleurement à une de ses faces et une autre extrémité qui se prolonge par un ergot à l'extérieur de la face opposée du tenon.

Grâce à l'invention, les éléments sont reliés entre eux et centrés sans qu'il y ait possibilité de glissement des éléments l'un sur l'autre.

Selon des aspects avantageux mais non obligatoires de l'invention, les éléments préfabriqués incorporent une ou plusieurs des caractéristiques suivantes :
- l'ergot est creux et ouvert à ses deux extrémités ;
- la pièce est un segment de tube ouvert à ses deux extrémités et destiné à former un logement femelle de réception d'une partie mâle appartenant à un autre élément ;
- les pièces creuses des tenons de plusieurs éléments peuvent être alignées longitudinalement de manière à former des tubes ouverts constituant des logements de réception de tiges d'ancrage et de verrouillage des éléments entre eux ;
- l'élément préfabriqué a une section transversale à profil en I et/ou en T ;
- l'élément préfabriqué comprend sur la partie située entre ses deux tenons au moins une zone de moindre résistance apte à être découpée pour former une alvéole de passage de câbles et/ou de conduits. Dans ce cas, cette zone est avantageusement formée dans une partie de l'élément à section transversale à profil en T ;
- l'élément préfabriqué est réalisé en une matière synthétique, notamment à base de polymères et/ou de copolymères.

L'invention concerne également une chambre de tirage, simple ou composée, dont au moins une partie du piédroit est formée par l'assemblage d'éléments préfabriqués tels que précédemment décrits.

L'invention sera mieux comprise et d'autres avantages de celle-ci apparaîtront plus clairement à la lumière de la description qui va suivre d'un mode de réalisation d'un élément préfabriqué, donnée uniquement à titre d'exemple et faite en référence aux dessins annexés dans lesquels :
- la figure 1 est une vue en perspective d'une chambre de tirage simple conforme à l'invention en cours de montage ;
- la figure 2 est une vue en perspective d'un élément préfabriqué de la chambre de la figure 1, avec des tenons diagonalement opposés ;
- la figure 2A est une vue en perspective selon la flèche F d'une extrémité de l'élément représenté à la figure 2 ;
- la figure 3 est une vue en perspective de quatre éléments préfabriqués assemblés pour constituer une couronne ;
- la figure 3A est une coupe verticale selon la ligne III_{A}-III_{A} de deux tenons assemblés tels que représentés à la figure 3 et
- la figure 4 est une vue analogue à la figure 3 pour une chambre de tirage composée.

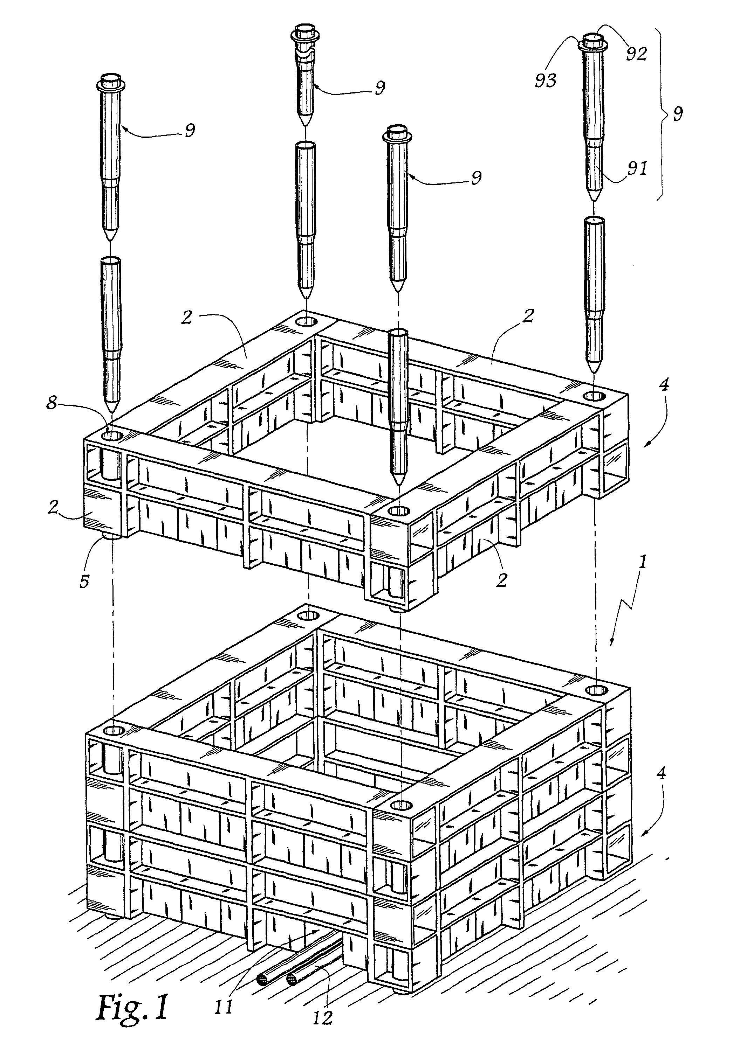

La chambre de tirage simple 1 représentée à la figure 1 est obtenue par empilement de couronnes 4, chaque couronne 4 comprenant quatre éléments préfabriqués identiques 2. Les éléments préfabriqués 2 sont assemblés de manière à ce que leurs tenons 3 viennent en appui les uns sur les autres, en formant des angles droits pour définir une couronne 4. Chaque tenon 3 forme un ergot 5 en prolongement d'un segment de tube central 7. Chaque ergot 5 est destiné à être inséré dans un logement 6 défini par le volume du segment de tube 7 du tenon 3 d'un autre élément 2, lorsque deux éléments 2 forment un des angles droits d'une couronne 4.

Ainsi, les ergots 5 des différents éléments 2 assurent un verrouillage efficace de ces éléments entre eux et des couronnes 4 entre elles, tout en assurant leur positionnement relatif.

Lorsque les couronnes 4 sont superposées, les segments de tube 7 sont alignés longitudinalement entre eux pour définir ensemble un logement tubulaire 8 dans lequel peut être éventuellement insérée une tige d'ancrage 9. Cette dernière permet de fixer l'ensemble de la chambre de tirage 1 sur le sol et améliore le verrouillage des éléments 2 entre eux.

Les éléments 2 sont réalisés par moulage de matériau synthétique, notamment à base de polymères et/ou de copolymères. Avantageusement, on les fabrique par moulage de polystyrène, polyéthylène, polypropylène, polyuréthanne, polycarbonate et/ou de copolymères de ces polymères, éventuellement chargés et/ou recyclés.

Sur les éléments 2 se trouvent des zones de moindre résistance 10 permettant de créer, par découpage ou sciage, des alvéoles 11 pour le passage de câbles et/ou de conduits 12.

Le dessus de la chambre de tirage 1 est fermé par un dispositif non représenté analogue à ceux connus dans l'art antérieur, par exemple tel que mentionné dans FR-B-2 584 876.

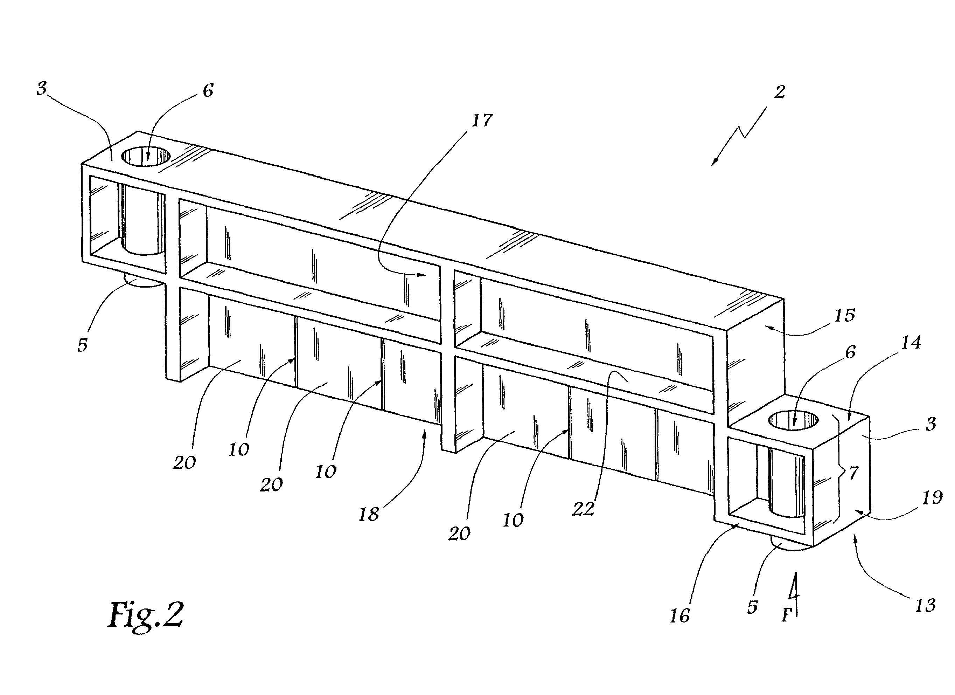

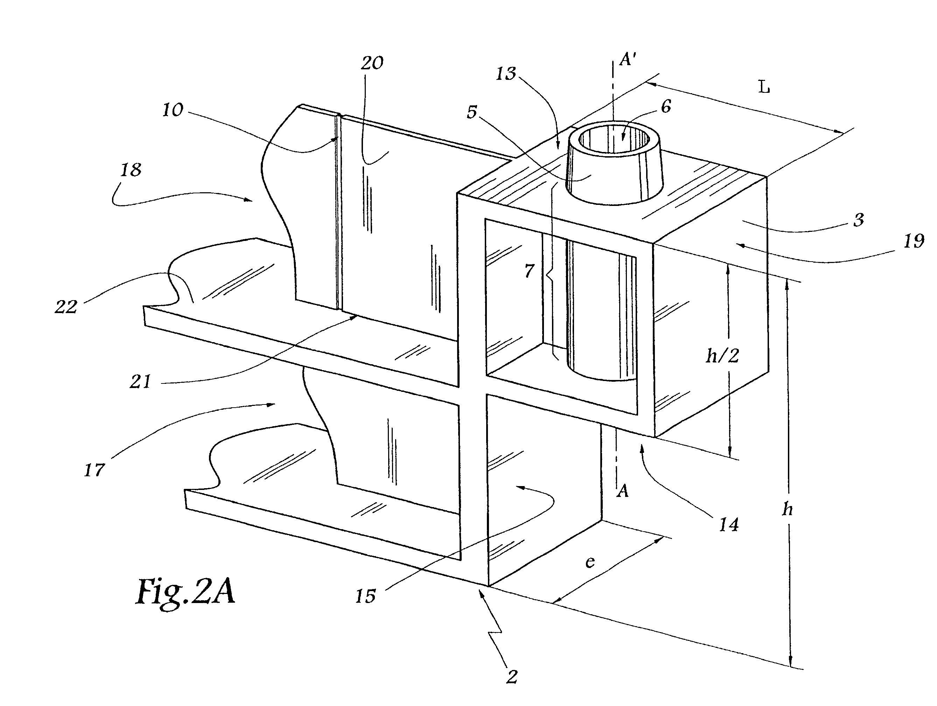

L'élément préfabriqué 2 représenté aux figures 2 et 2A, comprend deux tenons identiques 3 de forme parallélépipédique rectangle, de section verticale égale à la demi-section de l'élément 2, soit e x h/2, et de longueur L sensiblement égale à l'épaisseur e de l'élément 2. Chaque tenon 3 comprend une face 13 à partir de laquelle s'étend l'ergot central 5. Cet ergot, de forme tubulaire légèrement tronconique, est ouvert aux deux extrémités.

Sur la face 14 opposée à la face 13, débouche le segment de tube central 7, lui aussi légèrement tronconique, de longueur h/2 et ouvert aux extrémités.

L'ergot 5 et le segment de tube 7 sont situés dans le prolongement l'un de l'autre de manière à définir ensemble un logement central 6 d'axe A-A' globalement perpendiculaire aux faces 13 et 14. Lors de la formation d'une couronne, la face 14 d'un tenon 3 d'un premier élément 2 reçoit en appui la face 13 d'un tenon 3 d'un second élément 2. La face 13 du premier élément coopère, quant à elle, avec la face 14 du tenon 3 d'un troisième élément 2. Lors de cette coopération, l'extrémité 50 de l'ergot 5 du tenon 3 du premier élément 2 s'insère dans la partie 60, débouchant sur la face 14, du logement 6 du tenon 3 du second élément 2.

La forme légèrement tronconique des segments de tube 7 facilite l'insertion de l'extrémité 50 de l'ergot 5 d'un tenon 3 dans la partie 60 du logement 6 d'un autre tenon 3. Cette forme légèrement tronconique permet également de bloquer, par frottement, l'insertion de l'extrémité 50 de l'ergot 5 dans la partie 60 du logement 6 et d'assurer un assemblage ferme entre les éléments 2.

La forme légèrement tronconique des segments de tube 7 constitue également « un détrompeur » permettant d'éviter le montage « à l'envers » des éléments 2.

L'élément 2 tel que représenté à la figure 2 comprend une partie supérieure 17 à section transversale en I et une partie inférieure 18 à section transversale en T. Des zones de moindre résistance 10 sont avantageusement réparties dans la partie inférieure 18. Lorsque deux zones 10 adjacentes sont découpées ou sciées, on obtient une partie 20 du profilé en T 18 reliée à la nervure centrale 22 de l'élément 2 par un seul côté 21. Ce côté 21 est aisément sécable pour permettre l'enlèvement de la partie 20 et la création d'une alvéole 11 de passage de câbles ou de conduits 12.

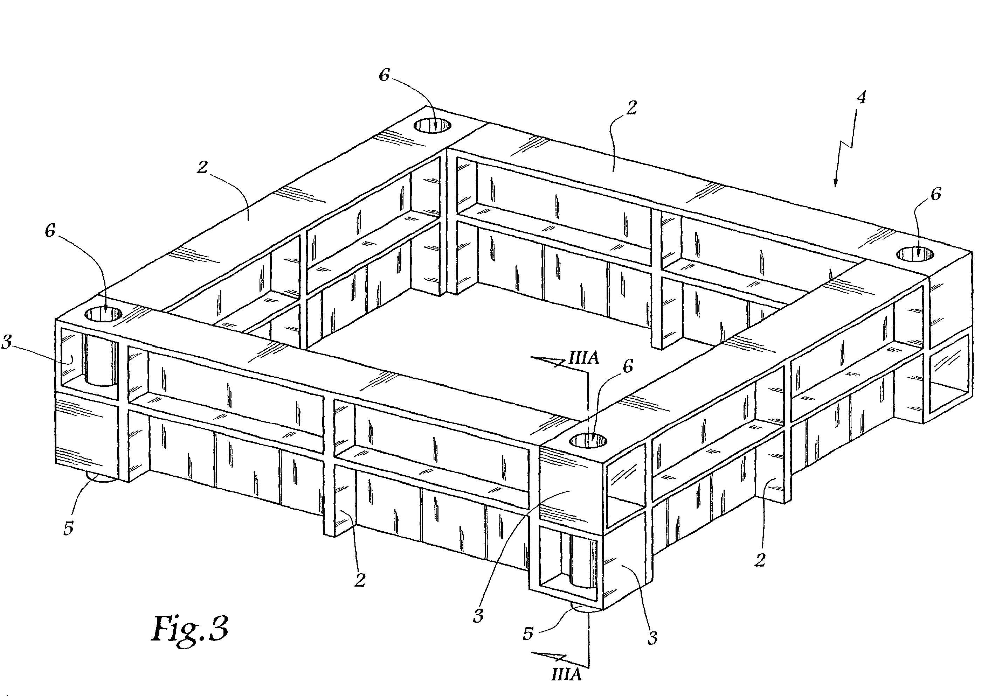

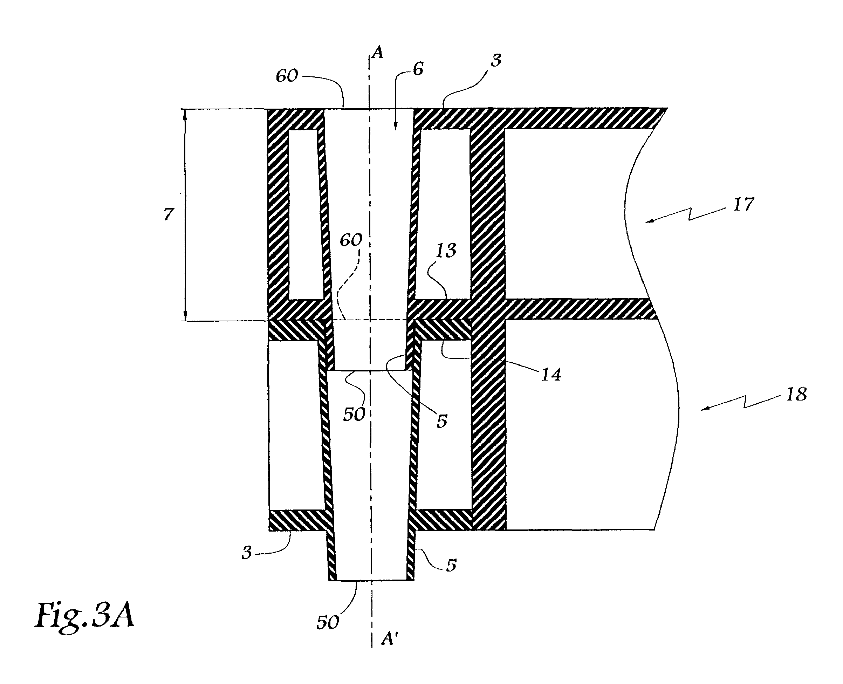

Lorsqu'on réalise une couronne 4 telle que représentée à la figure 3, on insère les ergots 5 d'un tenon 3 dans le logement 6 d'un tenon 3 d'un autre élément 2 en faisant venir au contact l'un de l'autre la face 15 d'un élément 2 avec un côté 16 du tenon 3 de l'autre élément 2. On obtient ainsi un assemblage à angle droit.

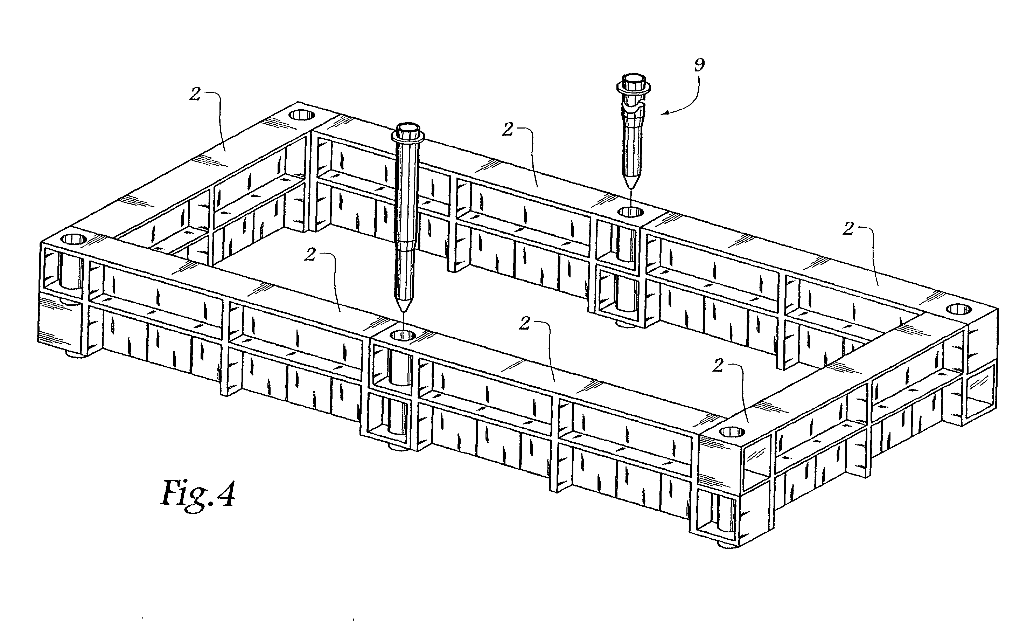

Pour réaliser une couronne 4 d'une chambre de tirage composée, telle que représentée à la figure 4, il convient d'assembler certains éléments 2 de manière à faire venir au contact l'une de l'autre la face 15 d'un élément 2 avec une face 19 d'un tenon 3 d'un autre élément 2. L'assemblage ainsi obtenu permet d'avoir deux éléments 2 dans le prolongement l'un de l'autre pour former un grand côté d'une couronne 4.

Dans les deux types d'assemblage des éléments 2 (à 90° ou à 180°), ces derniers sont bloqués l'un par rapport à l'autre par la coopération de leurs segments de tube 7 respectifs.

De tels éléments permettent la réalisation de chambres de tirage stables dans le temps et résistantes aux éventuels mouvements du sol.

L'alignement des segments de tube 7 des couronnes 4 empilées forme ainsi des logements globalement cylindriques 8 aptes à recevoir éventuellement des tiges d'ancrage 9. Ces dernières ont une hauteur adaptée à chaque couronne 4 et présentent une extrémité mâle 91 et une extrémité femelle 92 leur permettant de s'emboîter, à la manière de piquets de tente, lors de l'empilement des couronnes 4. La tige insérée dans la partie basse du logement 8 a une longueur suffisante pour pénétrer dans le sol ; celle insérée en partie haute peut recevoir une collerette 93 de blocage en translation.

L'utilisation des tiges d'ancrage n'est pas obligatoire avec une chambre réalisée au moyen d'éléments conformes à l'invention car le verrouillage obtenu par les parties mâle 5 et femelle 6 des tenons 3 est tout à fait satisfaisant dans la plupart des configurations d'utilisation.

Dans le cas de couronnes formées et empilées pour définir une chambre de tirage composée, les éventuelles tiges d'ancrage au sol 9 insérées dans les logements 8 permettent aussi de rigidifier cette dernière.

Les entretoises qui étaient auparavant préconisées au point de jonction des éléments préfabriqués, lorsque ceux-ci étaient assemblés à 180°, sont donc avantageusement supprimées, ce qui augmente le volume utile de la chambre de tirage et améliore les conditions de travail d'un opérateur.

Les éléments préfabriqués 2 conformes à l'invention qui sont réalisés en matériau synthétique permettent d'obtenir des piédroits d'épaisseur similaire aux piédroits réalisés en béton armé, mais d'un poids nettement inférieur à celui rencontré précédemment : Pour des éléments 2 préfabriqués de type 8/8, c'est-à-dire permettant d'obtenir des couronnes carrées de longueur intérieure égale à 800 mm, le poids de chaque élément est sensiblement inférieur au poids d'un élément analogue préfabriqué en béton armé. La manipulation, lors du transport et du montage de la chambre de tirage 1, s'en trouve ainsi facilitée.

## Revendications

1. Elément préfabriqué destiné à former une partie d'un piédroit d'une chambre de tirage, ledit élément comprenant, à chaque extrémité, un tenon de forme parallélépipédique rectangle prolongeant l'élément dans une de ses demi-sections d'une longueur sensiblement égale à l'épaisseur de l'élément, **caractérisé en ce que** chaque tenon (3) comprend, sur sa section verticale, une pièce creuse (7) traversant ledit tenon, située entre deux faces parallèles opposées (13, 14) dudit tenon destinées à coopérer avec un autre tenon (3), qui a une extrémité (60) en affleurement à une (14) desdites faces et une autre extrémité qui se prolonge par un ergot (5) à l'extérieur de la face opposée (13) dudit tenon.

2. Elément préfabriqué selon la revendication 1, **caractérisé en ce que** l'ergot (5) est de forme tronconique, ladite pièce creuse formant un logement femelle (6) également de forme tronconique de réception d'un ergot d'un autre élément préfabriqué selon la revendication 1, l'ergot (5) de forme tronconique et le logement femelle (6) de forme tronconique formant des moyens pour bloquer, par frottement, plusieurs exemplaires assemblés de l'élément préfabriqué.

3. Elément préfabriqué selon la revendication 1 ou 2, **caractérisé en ce que** ledit ergot (5) est creux et ouvert à ses deux extrémités.

4. Elément préfabriqué selon l'une des revendications précédentes, **caractérisé en ce que** ladite pièce est un segment de tube (7) ouvert à ses deux extrémités et destiné à former un logement femelle de réception (6) d'une partie mâle (5) appartenant à un autre élément.

5. Elément préfabriqué selon la revendication 4, **caractérisé en ce que** les segments de tube (7) des tenons (3) de plusieurs éléments (2) peuvent être alignés longitudinalement, de manière à former des tubes ouverts.

6. Elément préfabriqué selon la revendication 5, **caractérisé en ce que** lesdits segments de tube (7) constituent des logements (8) de réception de tiges d'ancrage (9) et de verrouillage desdits éléments entre eux.

7. Elément préfabriqué selon l'une des revendications précédentes, **caractérisé en ce que** ledit élément a une section transversale à profil en I (17) et/ou en T (18).

8. Elément préfabriqué selon l'une des revendications précédentes, **caractérisé en ce que** ledit élément (2) comprend, sur la partie située entre ses deux tenons (3), au moins une zone de moindre résistance (10) apte à être découpée pour former une alvéole (11) de passage de câbles et/ou de conduits (12).

9. Elément selon les revendications 7 et 8, **caractérisé en ce que** la zone de moindre résistance (10) est formée dans une partie (18) dudit élément à section transversale à profil en T.

10. Elément préfabriqué selon l'une des revendications précédentes, **caractérisé en ce que** ledit élément est réalisé en une matière synthétique, notamment à base de polymères et/ou de copolymères.

11. Chambre de tirage, simple ou composée, dont au moins une partie du piédroit est formée par l'assemblage d'éléments préfabriqués (2) selon l'une au moins des revendications précédentes.

## Claims

1. Prefabricated element intended to form part of a side wall of a manhole, the said element having, at each end, a tenon of rectangular parallelepiped shape extending the element in one of its half sections by a length essentially equal to the thickness of the element, **characterised in that** each tenon (3) has, on its vertical section, a hollow part (7) passing through the said tenon, situated between two opposing parallel faces (13, 14) of the said tenon intended to interact with another tenon (3), which has one end (60) flush with one (14) of the said faces and another end which is extended by a spigot (5) on the outside of the opposite face (13) of the said tenon.

2. Prefabricated element according to Claim 1, **characterised in that** the spigot (5) has a tapered shape, the said hollow part forming a female seat (6), which also has a tapered shape, for receiving a spigot of another prefabricated element according to Claim 1, the spigot (5) of tapered shape and the female seat (6) of tapered shape forming means for locking, by friction, several assembled sets of the prefabricated element.

3. Prefabricated element according to Claim 1 or 2, **characterised in that** the said spigot (5) is hollow and open at its two ends.

4. Prefabricated element according to one of the preceding claims, **characterised in that** the said part is a tube segment (7) open at its two ends and intended to form a female accommodating seat (6) for a male part (5) belonging to another element.

5. Prefabricated element according to Claim 4, **characterised in that** the tube segments (7) of the tenons (3) of several elements (2) can be aligned longitudinally, so as to form open tubes.

6. Prefabricated element according to Claim 5, **characterised in that** the said tube segments (7) constitute accommodating seats (8) for rods (9) for anchoring and locking the said elements to one another.

7. Prefabricated element according to one of the preceding claims, **characterised in that** the said element has a cross-section in the shape of an I (17) and/or of a T (18).

8. Prefabricated element according to one of the preceding claims, **characterised in that** the said element (2) has, on the part situated between its two tenons (3), at least one zone of less resistance (10) capable of being cut out to form a duct (11) for the passage of cables and/or pipes (12).

9. Element according to Claims 7 and 8, **characterised in that** the zone of less resistance (10) is made in a part (18) of the said element of T-shaped cross-section.

10. Prefabricated element according to one of the preceding claims, **characterised in that** the said element is made of a synthetic material, in particular based on polymers and/or copolymers.

11. Single or composite manhole, at least one part of the side wall of which is formed by the assembly of prefabricated elements (2) according to at least one of the preceding claims.

## Patentansprüche

1. Vorgefertigtes Bauteil zum Ausbilden eines Teils einer Seitenwand eines Einsteigschachtes, wobei das Bauteil an jedem Ende einen Vorsprung mit einer parallelepipedförmigen Quadergestalt aufweist, welcher das Bauteil jeweils in einem seiner Halbsektionen um eine Länge verlängert, die im wesentlichen gleich der Dicke des Bauteils ist,
**dadurch gekennzeichnet,**
**daß** jeder Vorsprung (3) über seinen vertikalen Querschnitt ein den Vorsprung durchsetzendes Hohlteil (7) aufweist, das sich zwischen zwei gegenüberliegenden, parallelen Seiten (13, 14) des Vorsprunges befindet, die dazu vorgesehen sind, mit einem weiteren Vorsprung (3) zusammenzuwirken, welcher ein Ende (60), das bündig an einer (14) der Seiten anliegt, und ein weiteres Ende aufweist, das mit einer Nase (5) außerhalb der gegenüberliegenden Seite (13) des Vorsprungs verlängert ist.

2. Vorgefertigtes Bauteil nach Anspruch 1,
**dadurch gekennzeichnet,**
**daß** die Nase (5) kegelstumpfförmig ist, wobei das Hohlteil eine ebenfalls kegelstumpfförmige Steckaufnahme (6) zum Aufnehmen einer Nase eines weiteren vorgefertigten Bauteils gemäß Anspruch 1 bildet, wobei die kegelstumpfförmige Nase (5) und die kegelstumpfförmige Steckaufnahme (6) Einrichtungen zum Festlegen von mehreren zusammengebauten Exemplaren des vorgefertigten Bauteils mittels Reibschluß bilden.

3. Vorgefertigtes Bauteil nach Anspruch 1 oder 2,
**dadurch gekennzeichnet,**
**daß** die Nase (5) hohl und an ihren beiden Enden offen ist.

4. Vorgefertigtes Bauteil nach einem der vorhergehenden Ansprüche,
**dadurch gekennzeichnet,**
**daß** das Teil ein Rohrsegment (7) ist, das an seinen beiden Enden offen ist und dazu vorgesehen ist, eine Steckaufnahme (6) zum Aufnehmen eines zu einem weiteren Bauteil gehörenden Einsteckteils (5) zu bilden.

5. Vorgefertigtes Bauteil nach Anspruch 4,
**dadurch gekennzeichnet,**
**daß** die Rohrsegmente (7) der Vorsprünge (3) mehrerer Bauteile (2) in Längsrichtung fluchtend angeordnet werden können, so daß sie offene Rohre bilden.

6. Vorgefertigtes Bauteil nach Anspruch 5,
**dadurch gekennzeichnet,**
**daß** die Rohrsegmente (7) Aufnahmen (8) zum Aufnehmen von Verankerungsstangen (9) und zum Verriegeln der Bauteile untereinander darstellen.

7. Vorgefertigtes Bauteil nach einem der vorhergehenden Ansprüche,
**dadurch gekennzeichnet,**
**daß** das Bauteil einen Querschnitt mit einem I-förmigen Profil (17) und/oder mit einem T-förmigen Profil (18) besitzt.

8. Vorgefertigtes Bauteil nach einem der vorhergehenden Ansprüche,
**dadurch gekennzeichnet,**
**daß** das Bauteil (2) in seinem zwischen seinen beiden Vorsprüngen (3) gelegenen Bereich mindestens eine Schwächungszone (10) aufweist, die ausgeschnitten werden kann, um eine Aussparung (11) für die Durchführung von Kabeln und/oder von Leitungen (12) zu bilden.

9. Bauteil nach den Ansprüchen 7 und 8,
**dadurch gekennzeichnet,**
**daß** die Schwächungszone (10) in einem Bereich (18) des Bauteils ausgebildet ist, der einen Querschnitt mit einem T-förmigen Profil besitzt.

10. Vorgefertigtes Bauteil nach einem der vorhergehenden Ansprüche,
**dadurch gekennzeichnet,**
**daß** das Bauteil aus einem synthetischen Material, insbesondere auf der Basis von Polymeren und/oder Copolymeren ausgebildet ist.

11. Einfacher oder zusammengesetzter Einsteigschacht, bei dem mindestens ein Teil der Seitenwand durch den Zusammenbau von vorgefertigten Bauteilen (2) nach mindestens einem der vorhergehenden Ansprüche ausgebildet ist.
